# EUROPÄISCHE PATENTANMELDUNG

(11) **EP 4 190 461 A1**
(43) Veröffentlichungstag der Anmeldung: **07.06.2023**
(21) Anmeldenummer: 22206457.8
(22) Anmeldetag: 09.11.2022
(51) Int. Cl.: B21D 22/02, B21C 35/02, B21C 35/03, B21C 37/30, B21C 23/08, B21C 23/14, B60R 19/02, B62D 25/00, B21D 3/14, B21D 53/88, B21D 41/02

(54) **VERFAHREN ZUR HERSTELLUNG EINES KRAFTFAHRZEUGSTRUKTURBAUTEILS AUS EINEM STRANGGEPRESSTEN MEHRKAMMERHOHLPROFIL**

(30) Priorität: 01.12.2021 US 202117539239
(71) Anmelder: Benteler Automobiltechnik GmbH, 33102 Paderborn (DE)
(72) Erfinder: Ahuja, Gaurav, Grandville, MI, 49418 (US); Michael, Vujay, Grand Rapids, MI, 49525 (US); Stemnes, Per Ivar, 2835 Raufoss (NO); Grewe, Jochem, 33154 Salzkotten (DE)
(74) Vertreter: Sprenger, Gerrit Lars Eike

(57) **Zusammenfassung**

Die Erfindung betrifft ein Verfahren zur Herstellung eines Kraftfahrzeugstrukturbauteils (1) aus einem stranggepressten Mehrkammerhohlprofil mit folgenden Schritten:
a) Bereitstellen eines Strangpressprofils (2) mit wenigstens zwei Ausgangshohlkammern (8, 9), welche durch eine Innenwand (7) voneinander getrennt sind, wobei wenigstens eine Außenwand (3, 4) wenigstens einer Ausgangshohlkammer (8, 9) im Querschnitt senkrecht zur Längserstreckung des Strangpressprofils (2) einen Bereich (16) mit nicht-linearen Verlauf aufweist,
b) Umformen des Strangpressprofils (2) in wenigstens einem seiner Endbereiche zum Kraftfahrzeugstrukturbauteil (1), wobei wenigsten der Bereich (16) mit nicht-linearen Verlauf der wenigstens einen Außenwand (3, 4) der wenigstens einen Ausgangshohlkammer (8, 9) mit im Querschnitt nicht-linearen Verlauf zumindest teilweise unter Veränderung des Querschnitts der jeweiligen Ausgangshohlkammer (8, 9) zum Querschnitt der entsprechende Hohlkammer (14, 15) des Kraftfahrzeugstrukturbauteils (1) begradigt wird.

## Beschreibung

Die Erfindung betrifft ein Verfahren zur Herstellung eines Kraftfahrzeugstrukturbauteils aus einem stranggepressten Mehrkammerhohlprofil.

Derartige Herstellverfahren sind beispielsweise aus der WO 2016 198396 A1 bekannt. Bei diesem Verfahren wird ein stranggepresstes Hohlkammer- beziehungsweise Mehrkammerhohlprofil, an dessen Außenwand ein Steg angeordnet ist, in ein zweiteiliges Werkzeug eingespannt. Dabei wird der Steg des stranggepressten Hohlkammerprofils zwischen beiden Werkzeughälften eingespannt und seine Hohlkammer in einem Hohlraum des Werkezuges eingelegt ist. Innerhalb dieser Hohlkammer wird das Hohlkammerprofil nunmehr zum fertigen Bauteil expandiert, indem mittels keilförmiger Werkzeuge in Form von Innendornen der Hohlraum aufgeweitet wird, wobei seine Breite vergrößert und seine Höhe verringert wird. Auch sind dort Verfahren zur Herstellung von Bauteilen aus stranggepressten Zweikammerhohlprofilen gezeigt, bei denen die beiden Hohlkammern mittels eines Steges getrennt sind. Das Umformen des stranggepressten Mehrkammerprofils bei diesem Herstellungsverfahren von entsprechenden Bauteilen ist allerdings dahingehend nachteilig, dass die Bauteilgröße durch vorhandene Strangpresswerkzeuge infolge des zum Einklemmen des stranggepressten Hohlkammerprofils in das Umformwerkzeug notwendige Abstehen des Steges die Bauteilgröße beschränkt ist. Der Querschnitt der Hohlkammer beziehungsweise der Hohlkammern zuzüglich der Ausbildung des Steges darf nämlich nicht die Dimensionen des Strangpresswerkzeuges überschreiten. Sollen die Dimensionen des Strangpresswerkzeuges überschreitende Bauteile hergestellt werden, müsste eine größere Anlage zum Herstellen von stranggepressten Hohlkammer- beziehungsweise Mehrkammerhohlprofilen angeschafft werden, was mit einem zusätzlichen immensen logistischen Aufwand verbunden ist und auch unter ökonomischen Gesichtspunkten nachteilig ist.

Es ist daher Aufgabe der Erfindung, ein Verfahren zur Herstellung eines Kraftfahrzeugstrukturbauteils aus einem stranggepressten Mehrkammerprofil bereitzustellen, das auf bestehenden Anlagen zur Herstellung von Strangpressprofilen hergestellt werden kann, wobei die Dimensionen des endgültigen Kraftfahrzeugstrukturbauteils größer sind als die Dimensionen der Strangpressprofile, die mit der Anlage hergestellt werden können.

Gelöst wird diese Aufgabe durch ein Verfahren mit allen Merkmalen des Patentanspruchs 1. Vorteilhafte Ausgestaltungen der Erfindung finden sich in den Unteransprüchen.

Das erfindungsgemäße Verfahren zur Herstellung eines Kraftfahrzeugstrukturbauteils aus einem stranggepressten Mehrkammerhohlprofil weist dabei folgende Verfahrensschritte auf:
a) Bereitstellen eines Strangpressprofils mit wenigstens zwei Ausgangshohlkammern, welche durch eine Innenwand voneinander getrennt sind, wobei wenigstens eine Außenwand wenigstens einer Ausgangshohlkammer im Quererstreckung senkrecht zur Längserstreckung des Strangpressprofils einen Bereich mit nicht-linearen Verlauf aufweist,
b) Umformen des Strangpressprofils in wenigstens einem seiner Endbereiche zum Kraftfahrzeugstrukturbauteil, wobei wenigstens der Bereich, der wenigstens einen Außenwand der wenigstens einen Ausgangshohlkammer mit in Quererstreckung nicht-linearen Verlauf zumindest teilweise unter Veränderung des Querschnitts der jeweiligen Ausgangshohlkammer zum Querschnitt der entsprechenden Hohlkammer des Kraftfahrzeugbauteils begradigt wird.

Dadurch das in einem ersten Verfahrensschritt ein Strangpressprofil mit wenigstens zwei Ausgangshohlkammern, welche durch eine Innenwand voneinander getrennt sind, wobei wenigstens eine Außenwand wenigstens einer Ausgangshohlkammer im Quererstreckung senkrecht zur Längserstreckung des Strangpressprofils einen Bereich mit nicht-linearen Verlauf aufweist bereitgestellt wird und in einem zweiten Schritt ein Umformen des Strangpressprofils in wenigstens einem seiner Endbereiche zum Kraftfahrzeugstrukturbauteil stattfindet, wobei wenigstens der Bereich der wenigstens einen Außenwand der wenigstens einen Ausgangshohlkammer mit in Quererstreckung nicht-linearen Verlauf zumindest teilweise unter Veränderung des Querschnitts der jeweiligen Ausgangshohlkammer zum Querschnitt der entsprechenden Hohlkammer des Kraftfahrzeugbauteils begradigt wird, ist es ermöglicht, Kraftfahrzeugstrukturbauteile herzustellen, deren Dimensionen größer sind, als die Dimensionen der stranggepressten Ausgangsbauteile. Insofern ist es mit dem erfindungsgemäßen Verfahren ermöglicht, Kraftfahrzeugstrukturbauteile aus stranggepressten Mehrkammerhohlprofilen auf Anlagen zum Strangpressen herzustellen, die eigentlich nicht für Kraftfahrzeugstrukturbauteil dieser Größe ausgebildet sind. Wesentliches Merkmal bei dem Herstellungsverfahren ist, dass das bereitgestellte Strangpressprofil den bereits angesprochenen an wenigstens einer Ausgangshohlkammer angeordneten, ungeraden Steg aufweisen, der beim erfindungsgemäßen Verfahren begradigt wird und das Außenwände der wenigstens einen umzuformenden Ausgangshohlkammer des Strangpressprofils derart umgeformt werden, dass der Querschnitt der wenigstens einer umgeformten Hohlkammern des Kraftfahrzeugstrukturbauteils größer ist als die entsprechende Ausgangshohlkammer des Strangpressprofils.

Durch die erfindungsgemäße Ausgestaltung des Herstellungsverfahrens ist es nunmehr ermöglicht, auf bestehenden Anlagen zur Herstellung von stranggepressten Hohlkammer- und Mehrkammerhohlprofilen Kraftfahrzeugstrukturbauteile oder Ausgangsbauteile dafür herzustellen, die Dimensionen aufweisen, die normalerweise nicht auf derartige Anlagen hergestellt werden können, da die Dimensionen des herzustellenden Kraftfahrzeugstrukturbauteils eigentlich zu groß für derartige Anlagen sind. Dadurch dass diese Kraftfahrzeugstrukturbauteile in einem Ausgangsprodukt in Form eines Strangpressprofils nun doch auf diesen Anlagen zumindest als Ausgangsbauteil hergestellt werden können, ist es nicht notwendig neue Anlagen zur Herstellung von stranggepressten Hohlkammer- bzw. Mehrkammerhohlprofilen anzuschaffen, wodurch der logistische als auch der ökonomische Aufwand bei der Herstellung derartigen Kraftfahrzeugbauteile deutlich minimiert ist. Zur Herstellung derartiger Kraftfahrzeugstrukturbauteile können bereits bestehende Anlagen zur Herstellung von stranggepressten Hohlkammer- bzw. Mehrkammerhohlprofilen sowie Umformanlagen zum Umformen derartiger stranggepresster Mehrkammerhohlprofile bzw. stranggepresster Hohlprofile verwendet werden. Derartige Anlagen zum Umformen können dabei für verschieden Kraftfahrzeugstrukturbauteile benutzt werden, da diese in der Regel mit verschieden Werkzeugen, insbesondere Presswerkzeugen bestückt werden können, sodass gegebenenfalls nur die die Presswerkzeuge angeschafft werden müssen und keine separate Umformanlage.

In Rahmen der Erfindung ist ein Bereich einer Außenwand mit nicht-linearer Verlauf so zu verstehen, dass die Außenwand im Querschnitt betrachtet konkav oder konvex gekrümmt ist, zum Beispiel halbkreisförmig, oder wellig geformt ist. Die Krümmung, im Querschnitt gemessen als maximale Abweichung bzw. Abstand von einer gedachten Geraden beträgt dabei mindestens 10 Prozent der Länge dieses Bereichs der Außenwand und in jedem Fall mindestens 10 Millimeter.

Nach einer ersten Ausgestaltung der Erfindung erfolgt das Umformen in Schritt b) in der Cavität eines geteilten Presswerkzeugs, mit wenigstens zwei separaten Teilen, wobei in einer Ausgangshohlkammer des Strangpressprofils der Querschnitt im Wesentlichen unverändert bleibt und ein Formwerkzeug oder Dorn eingelegt wird, dessen Außenkontur einer Innenkontur einer Hohlkammer des Kraftfahrzeugstrukturbauteils entspricht, während in der Ausgangshohlkammer des Strangpressprofils, deren Querschnitt verändert wird, ein expandierendes Formwerkzeug oder ein transversal bewegbarer Dorn eingelegt wird, das während und/oder nach einem Schließen des geteilten Presswerkzeugs expandiert oder transversal bewegt wird, bis die endgültige Form der Hohlkammer des Kraftfahrzeugstrukturbauteils erreicht ist.

Bei einem derartigen Umformen des Strangpressprofils zum Kraftfahrzeugstrukturbauteil ist gewährleistet, dass die Hohlkammern die gewünschten Dimensionen erhalten, sodass dadurch nicht nur ein Herstellen, sondern auch ein Kalibrieren der Hohlkammern beziehungsweise des Kraftfahrzeugstrukturbauteils ermöglicht ist.

Nach einer vorteilhaften Ausgestaltung der Erfindung wird während der Umformung im Schritt b) die Dicke mindestes einer Außenwand der im Querschnitt zu verändernden Hohlkammer verringert und die Dicke wenigstens einer anderen Außenwand der im Querschnitt zu verändernden Hohlkammer im Wesentlichen unverändert bleibt.

Weiterhin ist es in einer vorteilhaften Ausgestaltung der Erfindung vorgesehen, dass wenigstens an einer Außenwand wenigstens einer Ausgangshohlkammer ein nicht-linearer Steg angeordnet ist, der in Schritt b) wenigstens teilweise begradigt wird.

Weiterhin kann es vorgesehen sein, dass das Umformen gemäß Schritt b) derart erfolgt, dass ein umschreibender Kreis des Strangpressprofils einen kleineren Durchmesser aufweist als ein beschreibender Kreis des Kraftfahrzeugstrukturbauteils. Hierdurch wird nochmals verdeutlicht, dass die Dimensionen des Kraftfahrzeugstrukturbauteils deutlich größer sind als die Strukturen des bereitgestellten Strangpressprofils, wodurch ermöglicht wird, dass derartige Kraftfahrzeugstrukturbauteile auf Anlagen zur Herstellung von Strangpressprofilen bereitgestellt werden können, die eigentlich nicht zur Herstellung derartig groß dimensionierter Kraftfahrzeugstrukturbauteile geeignet sind.

Nach einer weiteren vorteilhaften Ausgestaltung der Erfindung ist es vorgesehen, dass die wenigstens eine Ausgangshohlkammer mehrphasig umgeformt wird, wobei zunächst eine Kompression wenigstens einer Außenwand in einer Kompressionsrichtung erfolgt, und dabei die Breite oder Höhe der Ausgangshohlkammer verringert wird und anschließend eine Expansion dieser wenigstens einen Außenwand in einer Expansionsrichtung erfolgt, wobei die Expansionsrichtung in einem Winkel zwischen 30° und 150 ° zur Kompressionsrichtung steht. Hierdurch wird erreicht, dass in einem ersten Umformschritt innerhalb des Presswerkzeuges die wenigstens eine Hohlkammer entsprechend komprimiert wird, während sie in einem zweiten Schritt zur endgültigen Hohlkammer des Kraftfahrzeugstrukturbauteils expandiert wird, wobei sie gleichzeitig kalibriert wird, während die Kalibrierung der weiteren Hohlkammern bereits im ersten Umformschritt innerhalb des Presswerkzeugs durch entsprechende, feste und nicht expandierende Innendorne erfolgen kann.

Weiterhin kann vorgesehen sein, dass die wenigstens eine Ausgangshohlkammer mehrphasig umgeformt derart wird, dass zunächst eine Expansion wenigstens einer Außenwand in einer Expansionsrichtung erfolgt, wobei die Expansionsrichtung in einem Winkel zwischen 30 und 150° zur Kompressionsrichtung steht und anschließend eine Kompression dieser wenigstens einen Außenwand in einer Kompressionsrichtung erfolgt, und dabei die Breite oder Höhe der Ausgangshohlkammer verringert wird.

Nach einem weiteren Gedanken der Erfindung ist es vorgesehen, dass der Innenwand während des Umformens in Schritt b) nicht umgeformt wird. Hierdurch ist erreicht, dass der Innenwand, der die umzuformende Ausgangshohlkammer von einer nicht umzuformenden Ausgangshohlkammer trennt während des Umformens unverändert bleibt und damit seine Dimension behält. Hierdurch ist gewährleistet, dass die Struktur dieser Innenwand unverändert bleibt und die während des Strangpressens hergestellte innere Struktur und damit Stabilität beibehält. Dabei können allerdings die Anbindungsstellen der Innenwand an den entsprechenden Außenwänden eine leichte Umformung erfahren, wobei allerdings der Innenwand selbst nicht umgeformt wird.

Alternativ kann es auch vorgesehen sein, dass der Innenwand während des Umformens in Schritt b) umgeformt wird. Hierbei ist dann zu berücksichtigen, dass dieser Innenwand bei der Herstellung des bereitgestellten Strangpressprofils entsprechend dimensioniert wird, um die erforderliche Stabilität des herzustellenden Kraftfahrzeugstrukturbauteils zu gewähren.

In einer weiteren Ausgestaltung der Erfindung ist es vorgesehen, dass wenigstens eine der Hohlkammern des Kraftfahrzeugstrukturbauteils eine geringere Breite als die entsprechende Ausgangshohlkammer des Strangpressprofils aufweist. Alternativ kann es natürlich auch vorgesehen werden, dass wenigstens eine der Hohlkammern des Kraftfahrzeugbauteils eine größere Breite als die entsprechende Ausgangshohlkammer des Strangpressprofils aufweist Durch beide Möglichkeiten ist eine entsprechende Dimensionierung des Kraftfahrzeugstrukturbauteils entsprechend des Erfindungsgedanken ermöglicht, die beide auf der gleichen Anlage zur Herstellung eines Strangpressprofils produziert werden können und dann in einer entsprechenden Umformanlage, insbesondere mit Presswerkzeugen und festen und/oder expandierenden Innendornen zum endgültigen Kraftfahrzeugstrukturbauteil umgeformt werden können.

In gleicher Weise ist es auch möglich, dass wenigstens eine der Hohlkammern des Kraftfahrzeugstrukturbauteils eine geringere Höhe als die entsprechende Ausgangshohlkammer des Strangpressprofils oder eine größere Höhe als das entsprechende Ausgangshohlkammerprofil des Strangpressprofils aufweist.

Nach einem weiteren Gedanken der Erfindung ist es vorgesehen, dass die wenigstens eine Ausgangshohlkammer des Strangpressprofils im Querschnitt rund, oval oder wenigstens einen Teilumfang bogenförmig ausgebildet bereitgestellt und zu einer mehreckigen Hohlkammer des Kraftfahrzeugbauteils umgeformt wird. Derartige runde, ovale oder bogenförmige Umfänge bzw. Teilumfänge lassen sich im Strangpressverfahren einfach herstellen und das nachfolgende Umformen der Ausgangshohlkammern verändert die innere Struktur ihrer Außenwände nur minimal, sodass potenzielle Schwachstellen vermieden werden können.

Weiterhin kann es vorgesehen sein, dass das Umformen gemäße Schritt b) ausschließlich in einem oder beiden Endbereiche der Längserstreckung des Strangpressprofils erfolgt. Allerdings ist es auch möglich, dass das Umformen gemäß Schritt B über die gesamte Längserstreckung des Strangpressprofils erfolgt.

Nach einem weiteren Gedanken der Erfindung ist es vorgesehen, dass das Umformen gemäß Schritt b) bei eine Restwärme des Strangpressprofils erfolgt. Durch diese Ausgestaltung der Erfindung es ermöglicht, ein effektiveres Umformen des Strangpressprofils zum Kraftfahrzeugstrukturbauteil zu ermöglichen. Durch die Restwärme des bereitgestellten Strangpressprofils ist ein leichteres Umformen desselben in dem Umformwerkzeug beziehungsweise Presswerkzeug ermöglicht, da ein Umformen eines erwärmten Strangpressprofils energetisch deutlich effektiver gestaltet werden kann als das Umformen eines abgekühlten Strangpressprofils. Insofern kann diese Restwärme genutzt werden, sodass sowohl auf ein energetisch ungünstigeres Kaltumformen des Strangpressprofils als auch auf ein nochmaliges Erwärmen des Strangpressprofils verzichtet werden kann. Hierdurch ist die energetische Bilanz bei der Herstellung des Kraftfahrzeugstrukturbauteils optimiert.

Nach einer weiteren Ausgestaltung der Erfindung ist es vorgesehen, dass sowohl Kompression als auch Expansion innerhalb des geteilten Presswerkzeugs im selben Presshub durchgeführt werden. Alternativ ist es auch möglich, Kompression und Expansion sequenziell nacheinander - auch in unterschiedlichen Werkzeugen - durchzuführen.

Abschließend soll auch ein Kraftfahrzeugbauteil, das mit einem zuvor beschriebenen Verfahren hergestellt wurde, geschützt sein. Dabei ist es vorteilhaft, wenn das Kraftfahrzeugstrukturbauteil aus einer Aluminiumlegierung der 6000er oder 7000er Gruppe nach EN 573-3 besteht. Derartige Aluminiumlegierungen lassen sich besonders gut im Strangpressverfahren herstellen und entsprechend umformen.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel eines stranggepressten Zweikammerhohlprofils in einer Querschnittdarstellung vor dem erfindungsgemäßen Umformen,
- Figur 2:: ein Ausführungsbeispiel eines erfindungsgemäßen Kraftfahrzeugstrukturbauteils nach einem erfindungsgemäßen Umformen des Strangpressprofils der Figur 1,
- Figur 3: ein Ausführungsbeispiel eines stranggepressten Dreikammerhohlprofils in einer Querschnittdarstellung vor dem erfindungsgemäßen Umformen zu einer Crashbox,
- Figur 4: das Ausführungsbeispiel eines stranggepressten Dreikammerhohlprofils gemäß der Figur 3 nach dem erfindungsgemäßen Umformen zu einer Crashbox,
- Figur 5: ein Ausführungsbeispiel eines stranggepressten Vierkammerhohlprofils in einer Querschnittdarstellung vor dem erfindungsgemäßen Umformen zu einem Stirnwandprofil,
- Figur 6: das Ausführungsbeispiel eines stranggepressten Dreikammerhohlprofils gemäß der Figur 5 nach dem erfindungsgemäßen Umformen zu einem Stirnwandprofil,
- Figur 7: ein Ausführungsbeispiels eines stranggepressten Zweikammerhohlprofils in einer Draufsicht,
- Figur 8: das Zweikammerhohlprofils der Figur 7 mit eigelegtem Formwerkzeug und eingelegt in ein geteiltes Presswerkzeug in einer Schnittdarstellung entlang der Schnittebene B-B der Figur 7 vor dem erfindungsgemäßen Umformen zu einem Bumper,
- Figur 9: das Zweikammerhohlprofils der Figur 7 mit eigelegtem Formwerkzeug und eingelegt in ein geteiltes Presswerkzeug in einer Schnittdarstellung entlang der Schnittebene B-B der Figur 7 nach dem erfindungsgemäßen Umformen zu einem Bumper und
- Figur 10: das Zweikammerhohlprofils der Figur 7 in einer Schnittdarstellung entlang der Schnittebene A-A der Figur 7.

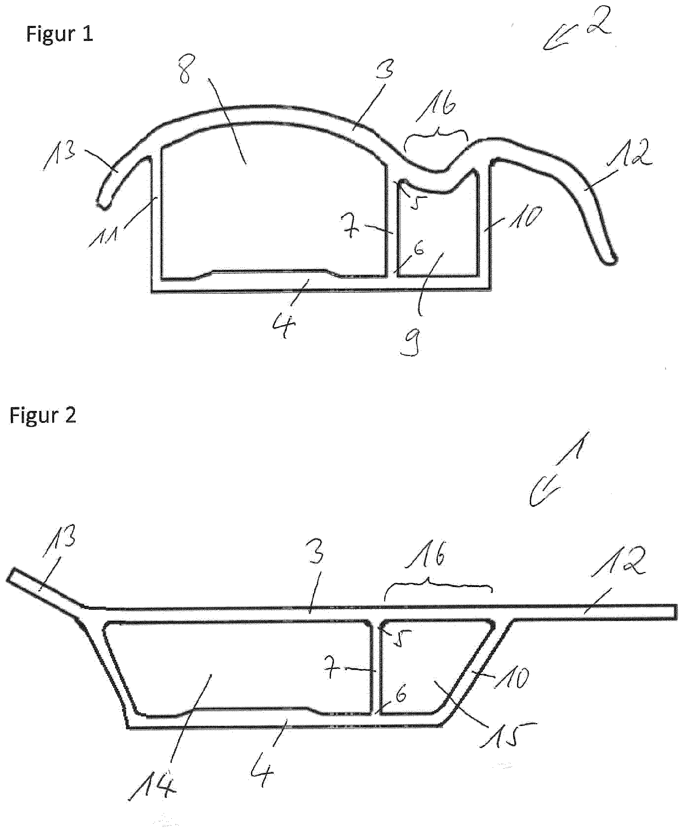

Figur 1 zeigt eine Querschnittdarstellung eines Ausführungsbeispiels eines Strangpressprofils 2 mit zwei Ausgangshohlkammern 8 und 9. Diese beiden Ausgangshohlkammern 8 und 9 sind durch einen Innenwand 7 voneinander getrennt. Der Innenwand 7 ist dabei an Anbindungsstellen 5 und 6 von Außenwänden 3 und 4 an deren Innenseiten angebunden. Die Außenwand 3 ist im Gegensatz zur Außenwand 4, welche in ihrer Quererstreckung zwischen Außenwänden 10 und 11 gerade beziehungsweise eben und somit linear ausgestaltet ist, gebogen ausgebildet. Die Außenwand 3 weist somit in ihrer Quererstreckung zwischen den Außenwänden 10 und 11 Bereiche 16 mit einem nicht linearen Verlauf auf. Im Bereich der Verbindungsstellen der Außenwände 10 und 11 mit der Außenwand 3 sind Stege 12 und 13 angeordnet, die ebenfalls ungerade beziehungsweise zu den Außenwänden 10 und 11 hingebogen ausgebildet sind. Diese gebogene Ausführung der Stege 12 und 13 ist dem Umstand geschuldet, dass ein derartiges Strangpressprofil 2 auf einer Anlage zum Strangpressen von Hohlkammer- beziehungsweise Mehrkammerhohlprofilen hergestellt werden kann, deren maximale Herstellungskapazität die Abstände zwischen den gebogenen Stegen 12 und 13 entspricht.

Nach dem Bereitstellen des Strangpressprofils 2 gemäß der Figur 1 wird dieses Strangpressprofil 2 in ein geteiltes hier nicht dargestelltes Presswerkzeug eingelegt, wobei die Ausgangshohlräume 8 und 9 des Strangpressprofils 2 mit in den Figuren nicht dargestellten Innendornen gefüllt werden.

Je nach dem Kraftfahrzeugstrukturbauteil 1, welches hergestellt werden soll, können diese Dorne und auch das Presswerkzeug dafür ausgelegt sein, das Strangpressprofil 2 in seiner gesamten Längserstreckung umzuformen. Alternativ ist es auch möglich, dass eine derartige Umformung durch entsprechende Innendorne und ein zwei- oder mehrteilige Presswerkzeug nur in den Endbereichen des Strangpressprofils 2 erfolgt. Nach dem Einlegen des Strangpressprofils 2 in das in den Figuren nicht dargestellte geteilte Presswerkzeug wird die gebogene, nicht lineare Außenwand 3 über ihre gesamte Quererstreckung, insbesondere in den Bereichen 16 mit nicht linearem Verlauf, begradigt, sodass sie parallel zur gegenüberliegenden Außenwand 4 verläuft. Während dieses Begradigens der Außenwand 3 kann auch ein Expandieren der Innendorne beispielsweise durch transversal expandierende, hier nicht dargestellte Dorne, derart erfolgen, dass die Außenwände 10 und 11 der Ausgangshohlkammern 8 und 9 entsprechend umgeformt werden. Dieses Umformen muss dabei nicht gleichzeitig mit dem Begradigen der Außenwand 3 erfolgen. Vielmehr kann dieses Umformen der Außenwände 10 und 11, welches mit einem expandieren der Ausgangshohlkammern 8 und 9 einhergeht, nachfolgend dem Begradigen der Außenwand 3 erfolgen.

Ebenfalls während des Begradigens der Außenwand 3 oder auch nachfolgend kann ein Begradigen der an den Außenwänden 10 und 11 angeordneten Stege 12 und 13 erfolgen. Nach einem derartigen Umformen des Strangprofils 2 der Figur 1 ist nunmehr das fertige Kraftfahrzeugstrukturbauteil 1 der Figur 2 entstanden. Wie aus Figur 2 ersichtlich ist, erstreckt sich nunmehr der an der Außenwand 10 angeordnete Steg 12 in Fortsetzung der Außenwand 3 des Kraftfahrzeugstrukturbauteils 1. Der Winkel zwischen dem Steg 12 und der Außenwand 3 beträgt demnach 180°. Im Gegensatz dazu ist der Steg 13, welcher an der Außenwand 11 angeordnet ist, zu der Außenwand 3 in einem stumpfen Winkel angeordnet.

Während des Umformens des Strangpressprofils 2 in dem geteilten Presswerkzeug erfolgt nicht nur eine Begradigung der Außenwand 3, sondern auch eine Streckung der Außenwände 10 und 11, während der die Ausgangshohlkammern 8 und 9 trennende Innenwand 7 während des gesamten Umformvorgangs unverändert bleibt. Die Außenwände 10 und 11, die bei dem Strangpressprofil 2 noch senkrecht auf der Außenwand 4 stehen, werden durch die Expansion der Innendorne innerhalb der Ausgangshohlkammern 8 und 9 des Strangpressprofils 2 derart abgewinkelt, dass sie mit der Außenwand 4 des Kraftfahrzeugstrukturbauteils 1 nunmehr unter einem stumpfen Winkel verlaufen. Der Winkel, den die Außenwände 10 und 11 mit der Außenwand 3 bilden, ist dagegen spitz.

Wie aus den Figuren 1 und 2 ersichtlich, hat sich die Höhe des Kraftfahrzeugstrukturbauteils 1 im Gegensatz zu der Höhe des bereitgestellten Strangpressprofils 2 verringert, während sich die Breite des gesamten Kraftfahrzeugstrukturbauteils 1 im Vergleich zum Strangpressprofil 2 vergrößert hat. Dabei ist auch festzustellen, dass sich die Breite der Hohlkammern 14 und 15 des Kraftfahrzeugstrukturbauteils 1 im Vergleich zu der Breite der Ausgangshohlkammern 8 und 9 des Strangpressprofils 2 vergrößert haben. Dabei ist die Querschnittfläche der Hohlkammern 14 und 15 des Kraftfahrzeugbauteils 1 gegenüber der Querschnittfläche der Hohlkammern 8 und 9 des Strangpressprofils 2 verändert. Deutlich zu erkennen ist auch nunmehr die Begradigung der Stege 12 und 13 im Kraftfahrzeugstrukturbauteil im Vergleich zu den zu den Außenwänden 10 und 11 hin gebogenen Stegen 12 und 13 des bereitgestellten Strangpressprofils 2.

Durch die Darstellungen in den Figuren ist auch nochmal verdeutlicht, dass mittels einer bestehenden Anlage zur Herstellung von Strangpressprofilen 2 nunmehr Kraftfahrzeugstrukturbauteile 1 mit Dimensionen zur Verfügung gestellt werden können, die sich eigentlich nicht auf der Anlage zur Herstellung von Strangpressprofilen darstellen lassen. Insofern kann eine kleindimensionierte Anlage zur Herstellung von Strangpressprofilen 2 mit einem nachfolgendem Umformschritt genutzt werden, um größer dimensionierte Kraftfahrzeugstrukturbauteile 1 herzustellen.

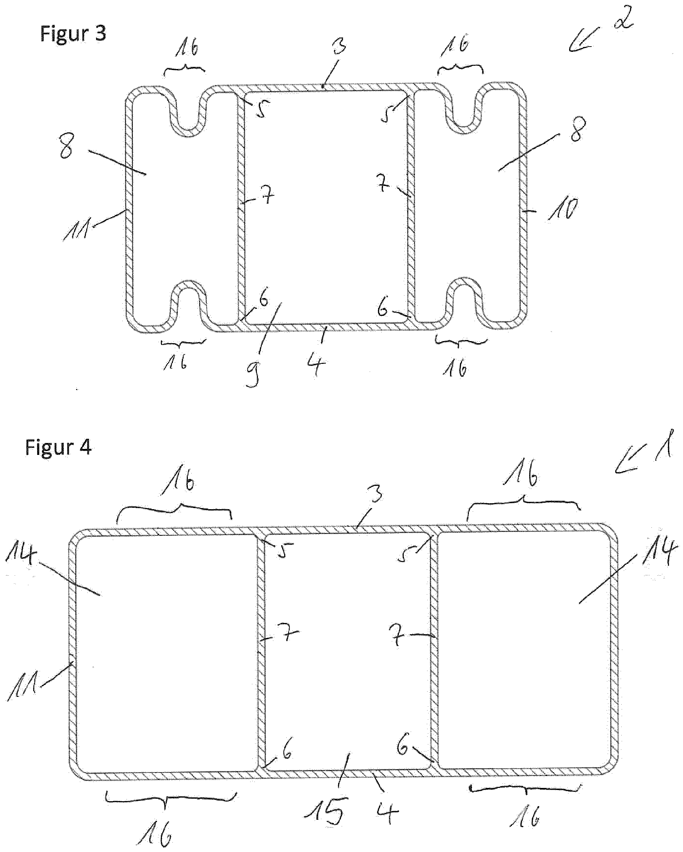

Figur 3 zeigt eine Querschnittdarstellung eines Ausführungsbeispiels eines Strangpressprofils 2 mit zwei Ausgangshohlkammern 8, zwischen denen eine weitere Ausgangshohlkammer 9 angeordnet ist. Dieses Strangpressprofil 2 dient als Ausgangsprofil zur Herstellung eines Kraftfahrzeugbauteils 1 in Form einer Crashbox oder eines Längsträgers. Die Ausgangshohlkammern 8 sind dabei durch Innenwände 7 von der Ausgangshohlkammer 9 getrennt. Die Innenwände 7 sind dabei an Anbindungsstellen 5 und 6 von Außenwänden und 4 an deren Innenseite angebunden. Sowohl die Außenwand 3 als auch die Außenwand 4, welche in ihrer Quererstreckung zwischen Außenwänden 10 und 11 angeordnet sind, weisen im Bereich der Hohlkammern 8 in ihrer Quererstreckung zwischen den Außenwänden 10 und 11 Bereiche 16 mit einem nicht linearen Verlauf auf.

Nach dem Bereitstellen des Strangpressprofils 2 gemäß der Figur 3 wird dieses Strangpressprofil 2 in ein geteiltes hier nicht dargestelltes Presswerkzeug eingelegt, wobei in die Ausgangshohlräume 8 und 9 des Strangpressprofils 2 in den Figuren nicht dargestellten Innendorne eingeführt werden.

Nach dem Einlegen des Strangpressprofil 2 in das in den Figuren nicht dargestellte geteilte Presswerkzeug werden die gebogenen, nicht linearen Bereiche 16 der Außenwand 3 im Bereich der Ausgangshohlräume 8 begradigt, sodass die Außenwände 3 und 4 nunmehr über ihre gesamte Quererstreckung linear und nicht gebogen ausgebildet sind und auch parallel zueinander verlaufen. Während dieses Begradigens der Außenwände 3 und 4 erfolgt ein Expandieren der Innendorne oder durch transversales Bewegen zweier, hier nicht dargestellter Dorne, wobei die Außenwände 10 und 11 der Ausgangshohlkammern 8 und 9 dabei im Wesentlichen nicht umgeformt werden. Nach dem Begradigen der Außenwände 3 und 4 ist das Strangpressprofil 2 der Figur 3 ist nunmehr die fertige Crashbox als Strukturbauteil 1 der Figur 4 entstanden. Dabei ist die Querschnittfläche der Hohlkammern 14 des Kraftfahrzeugbauteils 1 gegenüber der Querschnittfläche der Hohlkammern 8 des Strangpressprofils 2 vergrößert, während die Hohlkammer 15 des Kraftfahrzeugbauteils 1 gegenüber der Querschnittfläche der Hohlkammern 8 des Strangpressprofils 2 unverändert bleibt.

Während des Umformens des Strangpressprofils 2 der Figur 3 in dem geteilten Presswerkzeug erfolgt nur eine Begradigung der Außenwände 3 und 4. Sowohl die Außenwände 10 und 11 als auch die die Ausgangshohlkammer 8 von der Ausgangshohlkammer 9 trennenden Innenwände 7 bleiben während des gesamten Umformvorgangs unverändert. Wie aus dem Vergleich der Figuren 3 und 4 ersichtlich, hat sich während des Umformens des Strangpressprofils 2 zu dem Bumper als Kraftfahrzeugstrukturbauteil 1 die Breite der Ausgangshohlkammern vergrößert. Es ist daher festzustellen, dass sich die Breite der aus den Ausgangshohlkammern 8 des Strangpressprofils 2 hervorgegangenen Hohlkammern 14 des Kraftfahrzeugstrukturbauteils 1 im Vergleich zu der Breite der Ausgangshohlkammern 8 des Strangpressprofils 2 vergrößert haben. Weiterhin ist in den Figuren 3 und 4 zu erkennen, dass die Ausgangshohlkammer 9 des Strangpressprofils 2 unverändert in die Hohlkammer 15 des Kraftfahrzeugstrukturbauteils 1 übergegangen ist. Das gleiche gilt für die Höhe der Hohlkammern 14 und 15 des Kraftfahrzeugstrukturbauteils 1, die im Vergleich zu der Höhe der Ausgangshohlkammern 8 und 9 des Strangpressprofils 2 während es Umformens unverändert geblieben sind. Optional ist es möglich, dass das Crashbox-Strangpressprofil im geteilten Presswerkzeug durch das Expandieren selbst oder nach dem Expandieren der Ausgangshohlkammern 8 kalibriert wird, derart, dass die nicht dargestellten Presswerkzeughälften in die Außenwände, insbesondere im Bereich 16 Druckspannungen durch Kompression einbringen.

Durch die Darstellung in den Figuren ist auch nochmals verdeutlicht, dass mittels einer bestehenden Anlage zur Herstellung von Strangpressprofilen nunmehr Kraftfahrzeugstrukturbauteile 1 in Form einer Crashboxmit Dimensionen zur Verfügung gestellt werden können, die sich eigentlich nicht auf einer solchen Anlage zur Herstellung von Strangpressprofilen darstellen lassen. Insofern kann eine klein dimensionierte Anlage zur Herstellung von Strangpressprofilen mit einem nachfolgenden Umformschritt genutzt werden, um größer dimensionierte Kraftfahrzeugstrukturbauteile herzustellen. Zum Umformen können dabei bestehende Presswerkzeuge benutzt werden, in denen nur die Umformwerkzeuge entsprechend angepasst sein müssen.

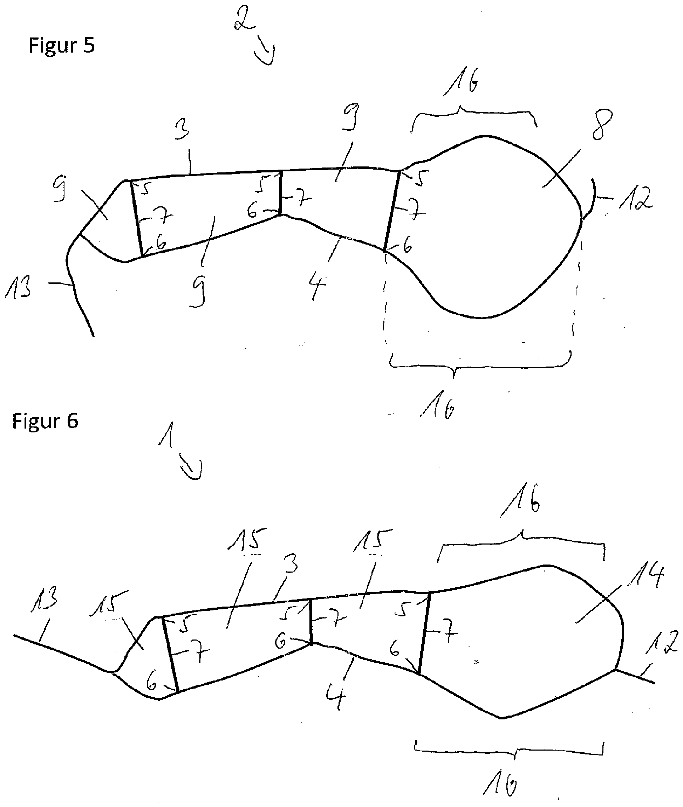

Weiterhin zeigt Figur 5 nunmehr eine Querschnittdarstellung eines weiteren Ausführungsbeispiels eines Strangpressprofils 2 mit vier Ausgangshohlkammern 8 und 9 vor Umformen zu einem in Figur 6 dargestellten Stirnwandprofil 1. Dieses Ausgangshohlkammern 8 und 9 sind durch Innenwände 7 voneinander getrennt. Die Innenwände 7 sind dabei an Anbindungsstellen 5 und 6 von Außenwänden 3 und 4 an deren Innenseite angebunden. Sowohl die Außenwand 3 als auch die Außenwand 4 sind im Bereich 16 der Ausgangshohlkammer 8 zwischen der die Ausgangshohlkammer 8 von einer Ausgangshohlkammer 9 trennenden Innenwand 7 und einem Steg 12 gebogen ausgebildet und weisen somit dort einen nicht linearen Verlauf auf. An einer der Ausgangshohlkammern 8 gegenüberliegenden Ausgangshohlkammer 9 ist wie bei der Ausgangshohlkammer 8 in dem Bereich, in welchem die Außenwände 3 und 4 aufeinander treffen ein Steg 13 angeordnet. Die beiden Stege 12 und 13 sind hierbei ebenfalls gebogen ausgebildet und weisen daher auch einen nicht linearen Verlauf auf. Die Stege 12 und 13 sind dabei - analog zu dem Ausführungsbeispiel der Figur 1 - zu den Hohlkammern 8 und 9 hingebogen. Diese gebogene Ausführung der Stege 12 und 13 ist wiederum dem Umstand geschuldet, dass ein derartiges Strangpressprofil auf einer Anlage zum Strangpressen von Holkammern- bzw. Mehrkammerprofilen hergestellt werden kann, deren maximale Herstellungsdimension die Abstände zwischen den gebogenen Stegen 12 und 13 entspricht.

Nach dem Bereitstellen des Strangpressprofils 2 gemäß der Figur 5 wird dieses Strangpressprofil in ein geteiltes hier nicht dargestelltes Presswerkzeug eingelegt, wobei die Ausgangshohlräume 8 und 9 des Strangpressprofils 2 mit in den Figuren nicht dargestellten Innendornen gefüllt werden.

Nach dem Einlegen des Strangpressprofils 2 in das in den Figuren nicht dargestellte geteilte Presswerkzeug werden die gebogenen nicht linearen Bereiche 16 der Außenwände 3 und 4 über ihre Quererstreckung, insbesondere in den Bereichen 16 mit nicht linearem Verlauf, teilweise begradigt, sodass die Höhe der Ausgangshohlkammer 8 verringert wird, während sich ihre Breite vergrößert. Dabei erfolgt zunächst eine Kompression der Außenwände 16 in einer Kompressionsrichtung unter Ausnutzung der Presswerkzeug-Schließbewegung, wobei dabei die Höhe der Ausgangshohlkammer 8 verringert wird. Anschließend erfolgt eine Expansion der Außenwände 16 in einer Expansionsrichtung unter Nutzung eines expandierenden Innenwerkzeugs oder quer bewegten Dorns, wobei die Expansionsrichtung in einem Winkel von etwa 90° zur Kompressionsrichtung, also zur Pressenschließrichtung steht.

Gleichzeitig mit der Kompression kann eine Begradigung der an den Außenwänden 3 und 4 angeordneten Stege 12 und 13 erfolgen. Nach einem derartigen Umformen des Strangprofils 2 der Figur 5 ist nunmehr das fertige Kraftfahrzeugstrukturbauteil 1 in Form eines Stirnwandprofils gemäß der Figur 6 entstanden. Wie aus der Figur 6 ersichtlich ist, erstreckt sich nunmehr an der aus der Ausgangshohlkammer 8 hervorgehenden Hohlkammer 14 des Kraftfahrzeugstrukturbauteils 1 der dort angeordnete Steg 12, wobei dieser nunmehr nicht mehr zu der Hohlkammer 14 gebogen ist. Vielmehr weist der Steg 12 nunmehr auch einen geraden, linearen Verlauf auf.

Im Gegensatz zu der Ausgangshohlkammer 8 des Strangpressprofils 2 bleiben wie Ausgangshohlkammern 9 des Strangpressprofils 2 während des Umformens unverändert und gehen in Hohlkammern 15 des Kraftfahrzeugstrukturbauteils 1 über. Lediglich der an der äußeren Hohlkammer 15 des Kraftfahrzeugstrukturbauteils 1 angeordnet Steg 13 wird während des Umformens ebenfalls begradigt, sodass er nunmehr auch einen geraden, linearen Verlauf entsprechend dem Steg 12 an der Hohlkammer 14 des Kraftfahrzeugstrukturbauteils 1 aufweist.

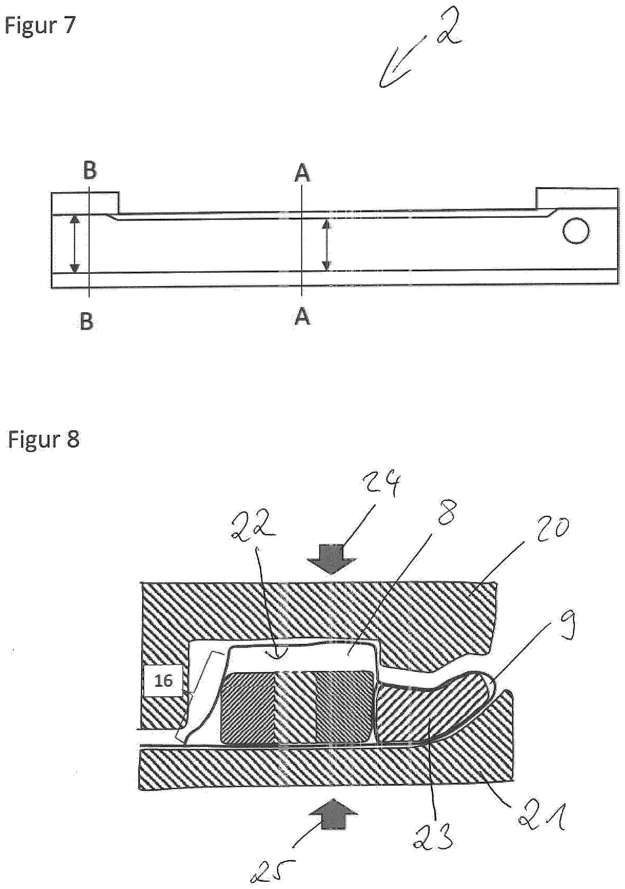

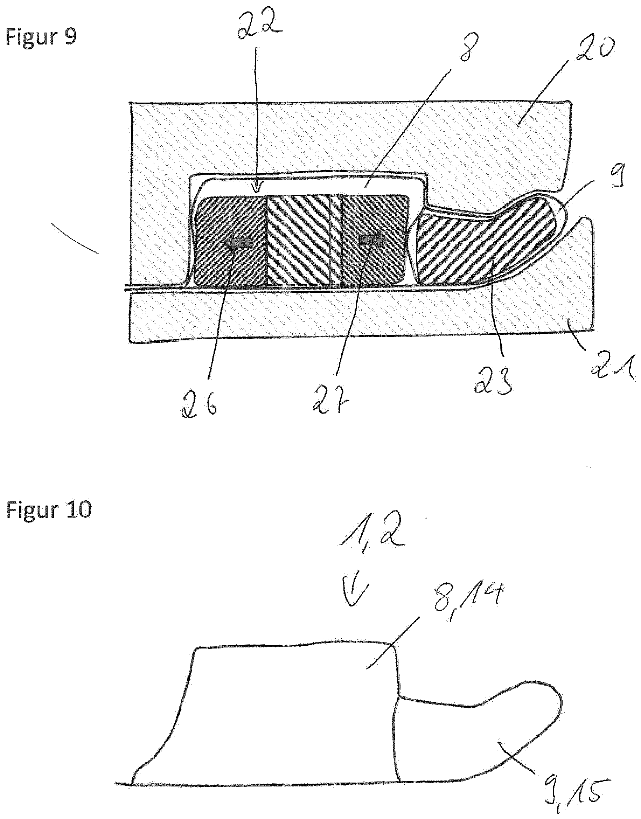

In der Figur 7 ist ein Strangpressprofil 2, welches als Zweikammerhohlprofil ausgebildet ist, in einer Draufsicht dargestellt. Wie dieser Darstellung zu entnehmen ist, ist dieses Strangpressprofil 2 an seinen Enden im Gegensatz zu seinem Mittelbereich unterschiedlich ausgebildet. Eine Querschnittdarstellung dieses Mittelbereichs zeigt Figur 10, welche den Querschnitt des Strangpressprofils 2 der Figur 7 entlang der Schnittebene A-A zeigt. Dieser Querschnitt bleibt während des Umformens des Strangpressprofils 2 zu einem Bumper unverändert. Das heißt, Ausgangshohlkammern 8 und 9 in dem Mittelbereich des Strangpressprofils 2 gehen unverändert während des Umformens zu dem Bumper in Hohlkammer 14, und 15 des als Bumper Kraftfahrzeugstrukturbauteils 1 über. Im Gegensatz dazu werden die beiden Endbereiche des Strangpressprofils 2 während des Umformens zu dem Bumper im Querschnitt verändert.

Der Querschnitt der Endbereiche des Strangpressprofils 2 ist in der Figur 8 dargestellt. Er entspricht dem Schnitt entlang der Ebene B-B der Figur 7. Dabei ist das Strangpressprofil 2 in ein geöffnetes zweigeteiltes Presswerkzeug 20, 21 eingelegt und in seinen Ausgangshohlkammern 8 und 9 befinden sich bereits die für das Umformen des Strangpressprofils 2 zu einem Bumper notwendige Formwerkzeuge 22 und 23. Dabei ist das Formwerkzeug 23 in der Ausgangshohlkammer 9 als massiver Dorn ausgebildet, während das Formwerkzeug 22 in der Ausgangshohlkammer 8 expandierbar beziehungsweise transversal bewegbar ausgebildet ist. Zum Schließen des Presswerkzeugs werden dessen beiden Teile 20 und 21 in den in Figur 8 dargestellten Pfeilrichtungen 24, 25 gegeneinander bewegt. Dabei wird die Höhe der Ausgangshohlkammer 8 verringert.

Nachfolgend oder gleichzeitig mit dem Schließen des Presswerkzeugs 20, 21 erfolgt ein transversales Verschieben des in der Ausgangshohlkammer 8 eingelegten Formwerkzeugs 22 in Richtung der Pfeile 26, 27. Dabei wird zum einen die Breite der Ausgangshohlkammer 8 vergrößert und zum anderen ein Bereich 16 einer Außenwand der Ausgangshohlkammer 8 mit nichtlinearem Verlauf begradigt, sodass die Endbereiche des aus dem Strangpressprofil 2 herzustellenden Bombers entstehen. Das so nunmehr zu dem Bumper umgeformte Strangpressprofil 2 kann nach dem Öffnen des Presswerkzeugs 20, 21 aus diesem entnommen werden.

### Bezugszeichenliste

- 1: Kraftfahrzeugstrukturbauteils
- 2: Strangpressprofil
- 3: Außenwand
- 4: Außenwand
- 5: Anbindungsstelle
- 6: Anbindungsstelle
- 7: Innenwand
- 8: Ausgangshohlkammer
- 9: Ausgangshohlkammer
- 10: Außenwand
- 11: Außenwand
- 12: Steg
- 13: Steg
- 14: Hohlkammer
- 15: Hohlkammer
- 16: Bereich
- 20: Presswerkzeug
- 21: Presswerkzeug
- 22: Formwerkzeug
- 23: Formwerkzeug
- 24: Pfeil
- 25: Pfeil
- 26: Pfeil
- 27: Pfeil

## Patentansprüche

1. Verfahren zur Herstellung eines Kraftfahrzeugstrukturbauteils (1) aus einem stranggepressten Mehrkammerhohlprofil mit folgenden Schritten:
a) Bereitstellen eines Strangpressprofils (2) mit wenigstens zwei Ausgangshohlkammern (8, 9), welche durch eine Innenwand (7) voneinander getrennt sind, wobei wenigstens eine Außenwand (3, 4) wenigstens einer Ausgangshohlkammer (8, 9) im Querschnitt senkrecht zur Längserstreckung des Strangpressprofils (2) einen Bereich (16) mit nicht-linearen Verlauf aufweist,
b) Umformen des Strangpressprofils (2) in wenigstens einem seiner Endbereiche zum Kraftfahrzeugstrukturbauteil (1), wobei wenigstens der Bereich (16) mit nicht-linearen Verlauf der wenigstens einen Außenwand (3, 4) der wenigstens einen Ausgangshohlkammer (8, 9) mit im Querschnitt nicht-linearen Verlauf zumindest teilweise unter Veränderung des Querschnitts der jeweiligen Ausgangshohlkammer (8, 9) zum Querschnitt der entsprechende Hohlkammer (14, 15) des Kraftfahrzeugstrukturbauteils (1) begradigt wird.

2. Verfahren nach Anspruch 1, **dadurch gekennzeichnet, dass** das Umformen in Schritt b) in der Cavität eines geteilten Presswerkzeugs erfolgt, wobei in einer Ausgangshohlkammern (8, 9) des Strangpressprofils (2) der Querschnitt im Wesentlichen unverändert bleibt und ein Formwerkzeug beziehungsweise Dorn eingelegt wird, dessen Außenkontur einer Innenkontur einer Hohlkammer (14) des Kraftfahrzeugstrukturbauteils (1) entspricht, während in der Ausgangshohlkammer (8, 9) des Strangpressprofils (2), deren Querschnitt verändert wird, ein expandierendes Formwerkzeug oder ein transversal bewegbarer Dorn eingelegt wird, das während und/oder nach einem Schließen des geteilten Presswerkzeugs expandiert oder transversal bewegt wird, bis die endgültige Form der Hohlkammer (15) des Kraftfahrzeugstrukturbauteils (1) erreicht ist.

3. Verfahren nach Anspruch 1, **dadurch gekennzeichnet, dass** während der Umformung im Schritt b) die Dicke mindestes einer Außenwand (3, 4, 10, 11) der im Querschnitt zu verändernden Hohlkammer (14, 15) verringert wird und die Dicke wenigstens einer anderen Außenwand (3, 4 10, 11) der im Querschnitt zu verändernden Hohlkammer (14, 15) im Wesentlichen unverändert bleibt.

4. Verfahren nach einem der vorhergehenden Ansprüche, **dadurch gekennzeichnet, dass** wenigstens an einer Außenwand (10, 11) wenigstens einer Ausgangshohlkammer (8, 9) ein nicht-linearer Steg (12, 13) angeordnet ist, der in Schritt b) wenigstens teilweise begradigt wird.

5. Verfahren nach einem der vorhergehenden Ansprüche, **dadurch gekennzeichnet, dass** das Umformen gemäß Schritt b) derart erfolgt, dass ein umschreibender Kreis des Strangpressprofils (2) einen kleineren Durchmesser aufweist als ein umschreibender Kreis des Kraftfahrzeugstrukturbauteils (1).

6. Verfahren nach einem der vorhergehenden Ansprüche, **dadurch gekennzeichnet, dass** die wenigstens eine Ausgangshohlkammer (8, 9) mehrphasig umgeformt wird derart, dass zunächst
eine Kompression wenigstens einer Außenwand (3, 4, 10, 11) in einer Kompressionsrichtung erfolgt, und dabei die Breite oder Höhe der Ausgangshohlkammer (8, 9) verringert wird, und
anschließend eine Expansion dieser wenigstens einen Außenwand (3, 4, 10, 11) in einer Expansionsrichtung erfolgt, wobei die Expansionsrichtung in einem Winkel zwischen 30 und 150° zur Kompressionsrichtung steht.

7. Verfahren nach einem der Ansprüche 1 bis 5, **dadurch gekennzeichnet, dass** die wenigstens eine Ausgangshohlkammer (8, 9) mehrphasig umgeformt wird derart, dass zunächst
eine Expansion wenigstens einer Außenwand (3, 4, 10, 11) in einer Expansionsrichtung erfolgt, wobei die Expansionsrichtung in einem Winkel zwischen 30 und 150° zur Kompressionsrichtung steht und
anschließend eine Kompression dieser wenigstens einen Außenwand (3, 4, 10, 11) in einer Kompressionsrichtung erfolgt, und dabei die Breite oder Höhe der Ausgangshohlkammer (8, 9) verringert wird.

8. Verfahren nach einem der vorhergehenden Ansprüche, **dadurch gekennzeichnet, dass** die Innenwand (7) während des Umformens in Schritt b) nicht umgeformt wird.

9. Verfahren nach einem der Ansprüche 1 bis 4, **dadurch gekennzeichnet, dass** die Innenwand (7) während des Umformens in Schritt b) ebenfalls umgeformt wird.

10. Verfahren nach einem der vorhergehenden Ansprüche, **dadurch gekennzeichnet, dass** wenigstens eine der Hohlkammern (14, 15) des Kraftfahrzeugstrukturbauteils (1)
a) eine geringere Breite als die entsprechende Ausgangshohlkammer (8, 9) des Strangpressprofils (2) aufweist oder
b) eine größere Breite als die entsprechende Ausgangshohlkammer (8, 9) des Strangpressprofils (2) aufweist.

11. Verfahren nach einem der vorhergehenden Ansprüche, **dadurch gekennzeichnet, dass** wenigstens eine der Hohlkammern (14, 15) des Kraftfahrzeugstrukturbauteils (1)
a) eine geringere Höhe als die entsprechende Ausgangshohlkammer (8, 9) des Strangpressprofils (2) aufweist oder
b) eine größere Höhe als die entsprechende Ausgangshohlkammer (8, 9) des Strangpressprofils (2) aufweist.

12. Verfahren nach einem der vorhergehenden Ansprüche, **dadurch gekennzeichnet, dass** die wenigstens eine Ausgangshohlkammer des Strangpressprofil (2) im Querschnitt rund, oval oder wenigstens ein Teilumfang bogenförmig ausgebildet bereitgestellt und zu einer mehreckigen Hohlkammer (14, 15) des Kraftfahrzeugstrukturbauteils (1) umgeformt wird.

13. Verfahren nach einem der vorhergehenden Ansprüche, **dadurch gekennzeichnet, dass** das Umformen gemäß Schritt b) ausschließlich in einem oder beiden Endbereichen der Längserstreckung des Strangpressprofils (2) erfolgt.

14. Verfahren nach einem der vorhergehenden Ansprüche, **dadurch gekennzeichnet, dass** das Umformen gemäß Schritt b) über die gesamte Längserstreckung des Strangpressprofils (2) erfolgt.

15. Verfahren nach Anspruch 2, **dadurch gekennzeichnet, dass** sowohl Kompression als auch Expansion innerhalb des geteilten Presswerkzeugs im selben Pressenhub durchgeführt werden.
